# EUROPEAN PATENT SPECIFICATION

(11) **EP 1 950 334 B1**
(45) Date of publication and mention of the grant of the patent: **27.04.2011**
(21) Application number: 07001583.9
(22) Date of filing: 25.01.2007
(51) Int. Cl.: D06F 37/00, D06F 37/26

(54) **Hose co-moldable with plastic tub, in particular for a washing machine**
Mit Kunststoffrohr formbarer Schlauch, im Besonderen für Waschmaschinen
Flexible co-moulé avec un tube en plastique, spécialement pour une machine à laver

(43) Date of publication of application: 30.07.2008
(73) Proprietor: Aktiebolaget SKF, 415 50 Göteborg (SE)
(72) Inventor: Mola, Roberto, 10129 Torino (IT); Pairone, Gianfranco, 10141 Torino (IT); Finetti, William, 10040 La Loggia (TO) (IT); Lazzari, Tommaso, 10121 Torino (IT)
(74) Representative: Fioravanti, Corrado

(56) References cited:
- EP-A- 1 767 684
- GB-A- 2 169 040
- US-A- 4 423 540
- US-A1- 2006 125 150

## Description

The present invention relates to a hose co-moldable with plastic tub, in particular for a washing machine.

In general, co-moldable hoses with washing machine tubs become an integral part of the tubs themselves in order to facilitate assembly operations of the washing machines, and comprise two rolling bearings which are arranged along a rotation axis of a drum of the washing machine; and a tubular body which is made of metallic material, which presents two end housings for housing the two bearings in its own interior which are arranged at a determined distance from each other, and which is co-molded together with the plastic tub once the bearings have been force-fitted inside the housings. In order to guaranty a correct interference fit between bearings and housings, the housings are machined beforehand, typically by grinding.

The tubular body does not only have the function of rendering the hose rigid, it also has the function of maintaining the two bearings in position during the operations relating to inserting the hose into the mold as well as during the molding operations during which the tubular body and the bearings heat up. As, however, the thermal expansion coefficient of the metallic material which constitutes the tubular body is different from the one of the metallic material which constitutes the bearings, and as the actual molding conditions involve high levels of both temperature and injection pressure, it can happen, during the molding of the tub over the hose, that the coupling between the bearings and the relative housings becomes loose in such a way as to cause the bearing to move from its housing and can even, in the worst of cases, cause the exit of the bearing itself from the housing. For instance, with the tubular body made of aluminium and the bearings made of steel, the original interference fit between bearings and housings may be cancelled due to the fact that the aluminium housings expand much more than the steel bearings when heated up.

US 2006/0125150 discloses a hose co-moldable with plastic tub for a washing machine, presenting a longitudinal axis and comprising a bearing and a metallic tubular body which extends along the longitudinal axis and which provides a housing for the bearing. The housing is delimited towards the longitudinal axis by an inner radial surface.

The aim of the present invention is to produce a hose which can be co-molded with washing machine tubs, which will be simple and cost-effective to produce, and which will resolve the problem of the above-described disadvantage in a simple and economical fashion.

According to the present invention a hose which can be co-molded with a washing machine tub will be produced, presenting a longitudinal axis and comprising two bearings which are arranged along the axis at a determined distance from one another, and a metallic tubular body which extends along the axis and which is provided, for each bearing, with a housing for the relative bearing which is delimited towards the axis by a respective inner radial surface; the hose being characterised by the fact of comprising, in addition, covering and blocking means which are also co-molded with the said bearings and the said tubular body inside each housing in a position which is radially intermediate between a relative radial surface and a relative bearing in order to internally cover the housing itself and to block the relative bearing inside the relative housing.

The present invention will now be described with reference to the attached drawings, which illustrate some non-limiting forms of embodiment of the present invention, and in which:
- FIGURE 1 shows an exploded perspective view of a first preferred form of embodiment of a hose which can be co-molded with washing machine tubs according to the present invention;
- FIGURE 2 is a section view of the hose which is shown in FIGURE 1; and
- FIGURE 3 is a section view of a second preferred form of embodiment of the hose which is shown in FIGURE 1.

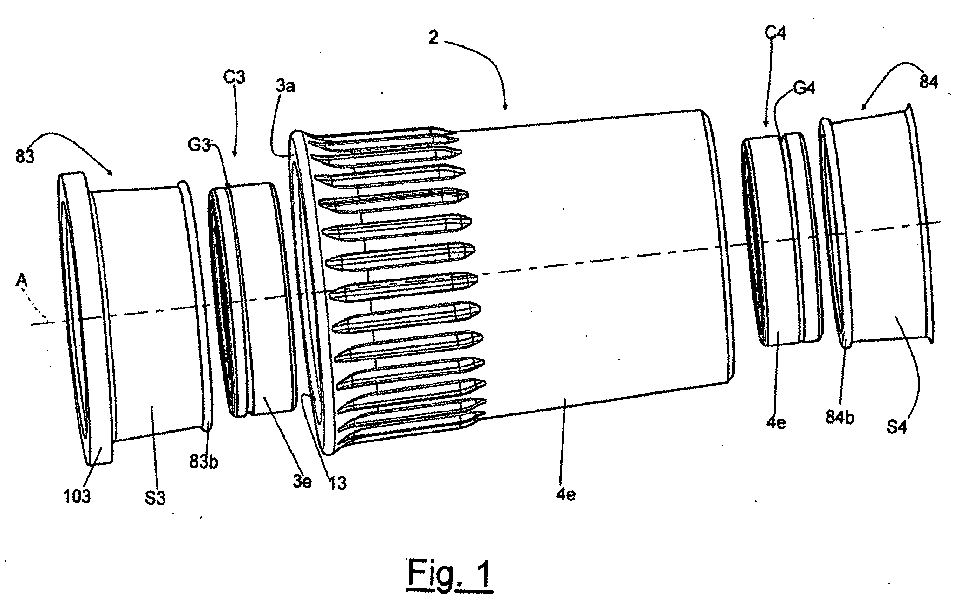

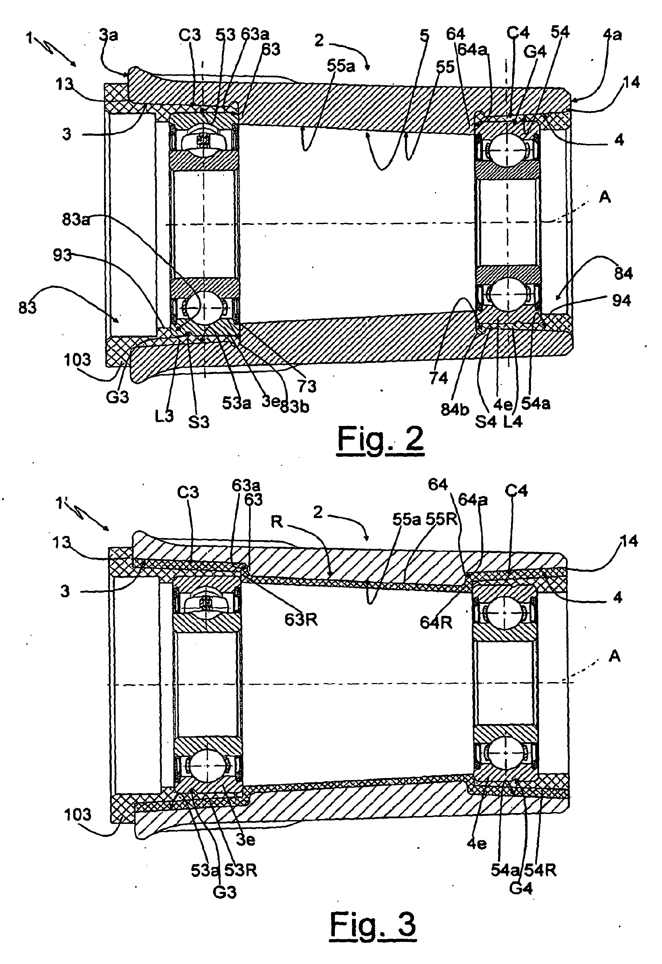

With reference to FIGURES 1 and 2, the number 1 refers to a hose which can be co-molded with washing machine tubs in its entirety.

The hose 1 presents a longitudinal axis A, and comprises a hollow metallic tubular body 2 which extends along the axis A, two housings 3 and 4 which are obtained in correspondence to the opposite ends of the body 2, and two rolling bearings C3 and C4 which are inserted, as is better described in the description which follows, inside the housings 3 and, respectively, 4.

The body 2 is axially delimited by two annular end surfaces 3a and 4a, which define respective entry borders 13 e 14 for the housings 3 and, respectively, 4, and is internally crossed by a conduit 5 which presents an inner section 55, and two entry sections 53 and 54, which extend towards the section 55 starting from the border 13 and, respectively, 14 and which define the housings 3 and 4.

In particular, the inner section 55 presents a diameter of dimensions which are smaller than the dimensions of the diameter of each of the sections 53 and 54, and defines with the sections 53 and 54 two shoulders 63 and, respectively, 64, which are arranged inside the conduit 5, and which are axially delimited by respective annular surfaces 63a and 64a which are transverse to the axis A, are axially turned towards the outside of the body 2, and are arranged at a determined axial distance DA from each other.

In addition, the section 55 presents an inner tapering surface 55a which has a decreasing diameter from the shoulder 63 towards the shoulder 64, and the sections 53 and 54 present respective inner tapering surfaces 53a e 54a with diameters which increase from the relative shoulders 63 and 64 towards the relative entry borders 13 and 14 and which are provided with respective annular recesses 73 and 74 which are obtained in correspondence to the relative surfaces 63a and 64a.

In the preferred form of embodiment of the hose 1 which is illustrated in FIGURES 1 and 2, the bearings 3 and 4 comprise respective outer races 3e and 4e which are in direct contact with the relative surfaces 63a and 64a, and which present an outer diameter of dimensions smaller than the minimum dimensions of the inner diameter of the surfaces 53a and, respectively, 54a in such a way as to leave between the latter and the races 3e and 4e radial gaps L3 and L4 of increasing thickness towards the relative entry borders 13 and 14.

In addition the hose 1 comprises two covering and blocking bodies 83 and 84, which are made of plastic material, and which are obtained by co-molding with the bearings C3 and C4 and with the body 2 in such a way as to completely fill the gaps L3 and L4 and to completely cover the housings 3 and 4.

The bodies 83 and 84 are arranged inside each housing 3 and 4 in a position which is radially intermediate between a relative,surface 53a e 54a and a relative bearing C3 and C4 in order to internally cover the housings 3 and 4 themselves, and present respective shoulders 93 and 94 which are obtained during the injection molding directly in axial contact with the races 3e and 4e opposite the shoulder 63 and, respectively, 64 in order to axially block the relative bearing C3 and C4 inside the relative housing 3 and 4.

Therefore, it is no longer necessary to machine the surfaces 53a and 54a since they are not in direct contact with the outer races 3e and 4e anymore. Only the shoulder surfaces 63a and 64a require a grinding operation in order to guaranty a correct perpendicularity of the bearings with respect to the axis A.

In addition, the bodies 83 and 84 present respective radial protrusions 83b and 84b, which are obtained during the injection molding directly inside the recesses 73 and 74, and which define respective axial blocking elements of the bodies 83 and 84 in relation to the housings 3 and 4.

The body 84, like the relative shoulder 94, extends axially as far as the relative entry border 14, while the body 83 extends axially beyond the relative entry border 13 and presents an annular protrusion 103, which is arranged axially against the surface 3a, cooperates with the relative radial protrusion 83b in order to axially block the body 83 in relation to the relative housing 3, and which defines a mounting surface for any eventual outer seals which may be rendered necessary to apply to the hose 1.

The shoulder 93 is axially limited in length and does not extend along the whole of the body 83 starting from the bearing C3, but presents a reduced axial thickness in order to define an inner radial surface 83a of the body 83 which has an inner diameter of dimensions which are substantially smaller to the dimensions of the outer diameter of the bearing C3.

In the form of embodiment which is illustrated in FIGURES 1 and 2, the bodies 83 and 84 define respective covering layers S3 and S4 for the housings 3 and, respectively, 4, and, as has already been described, the bearings C3 and C4 are arranged directly against the shoulders 63 and 64 and are axially blocked on one side by the same shoulders 63 and 64, and by the shoulders 93 and 94 on the axially opposite side.

The presence of the layers S3 and S4 allows for the compensation of any eventual differential expansion between the bearings C3 and C4 and the body 2, these latter three elements being made of metallic material with different expansion coefficients which, as described in the foregoing introduction, may determine different behaviour in the relative elements during the co-molding phase of the hose 1 with the washing machine tub.

The presence of the layers S3 and S4, made preferably but not necessarily of plastic material since its thermal expansion coefficient is much bigger than the one of steel, defines a kind of absorber and compensating agent in relation to any eventual variations in the dimensions of the bearings C3 and C4 and the body 2 and completely prevents any movement whatsoever of the bearings C3 and C4, or indeed the exit of the bearings C3 and C4 from their relative housings 3 and 4 and guarantees the correct execution of the molding operations relating to the hose 1 with the washing machine tub.

The alternative form of embodiment which is illustrated in FIGURE 3 refers, instead, to a hose 1' which is substantially similar to the hose 1, from which the hose 1' differs due to the fact that it comprises a continuous covering R for the whole of the conduit 5 which presents a substantially constant radial thickness along the whole of the axis A.

The covering R comprises an inner portion 55R which is arranged in contact with the surface 55a, and two entry portions 53R and 54R, which start from the relative surfaces 3a e 4a, and which are arranged in contact with the surfaces 53a and 54a and with the surfaces 63a and 64a. In other words, the portions 53R and 54R are arranged in a position which is radially intermediate between the layers S3 and S4, and the bearings C3 and C4 which are arranged in such a way as to no longer directly abut the shoulders 63 and 64, but to abut the respective coverings 63R and 64R which connect the portions 53R and 54R to the portion 55R. Therefore, it is no longer required to grind the shoulder surfaces 63a and 64a as described earlier for the first embodiment.

The covering R is produced by injection molding with the bearings C3 and C4 and with the body 2 and presents the additional advantage of completely insulating the conduit 5 against the action of external agents and further increases the capacity of the hose 1' to absorb any eventual differential expansion between the bearings C3 and C4 and the body 2.

With the aim of preventing any accidental rotation whatsoever of the bearings C3 and C4 during functioning, the races 3e and 4e of these bearings C3 and C4, in the form of embodiment of the hose 1, as well as in the form of embodiment of the hose 1', are provided with respective radial grooves G3 and G4 which are eccentric in relation to the axis A. During the co-molding of the bearings C3 and C4 with the body 2 and the bodies 83 and 84, these grooves G3 and G4 are filled with plastic material so that they create a coupling of such a shape as to integrally block the bodies 83 and 84 with the races 3e and 4e.

It is intended that the present invention should not be limited to the forms of embodiment which are herein described and illustrated, which are to be considered as examples of forms of embodiment of the co-moldable hose with washing machine tubs, and which may instead be subject to further modifications relating to the shape and disposition of its parts, as well as to details pertaining to construction and assembly.

## Claims

1. Hose (1) (1') co-moldable with plastic tub, in particular for a washing machine, presenting a longitudinal axis (A) and comprising two bearings (C3, C4) which are arranged along the axis (A) at a determined distance from one another, and a metallic tubular body (2) which extends along the axis (A) and which is provided, for each bearing (C3, C4), with a housing for the relative bearing (C3, C4) which is delimited towards the axis (A) by a respective inner radial surface (53a, 54a) ; the hose (1) (1') being **characterised by** the fact of comprising, in addition, covering and blocking means (83, 84) which are co-molded with the said bearings (C3, C4) and the said tubular body (2) inside each housing (3, 4) in a position which is radially intermediate between a relative radial surface (53a, 54a) and a relative bearing (C3, C4)'in order to internally cover the housing (3, 4) and to block the relative bearing (C3, C4) inside the relative housing (3, 4).

2. Hose according to Claim 1, **characterised by** the fact that the said covering and blocking means (83, 84) comprise, for each housing (3, 4) a first covering layer (S3, S4) which is arranged in direct contact with an outer race (3e, 4e) of the relative bearing (C3, C4).

3. Hose according to Claim 2, **characterised by** the fact that the said covering and blocking means (83, 84) comprise, for at least one of the said two housings (3, 4), a first shoulder (93, 94) which is arranged axially against the said bearing (C3, C4) and axially outside the bearing (C3, C4) itself in relation to the tubular body (2) in order to block, in an axial direction from the outside of the tubular body (2), the bearing (C3, C4) itself.

4. Hose according to Claim 3, **characterised by** the fact that each of the said housings (3, 4) comprises a second shoulder (63, 64)(63R, 64R) which is arranged axially against the relative bearing (C3, C4) and at an axially inner side of the bearing (C3, C4) itself in relation to the tubular body (2) in order to block, in an axial direction from the inside of the tubular body (2), the bearing (C3, C4) itself.

5. Hose according to Claim 4, **characterised by** the fact that the said second shoulder (63, 64) is produced in a single piece with the said tubular body (2).

6. Hose according to Claim 5, **characterised by** the fact that the said covering and blocking means (83, 84) comprise, for at least one of the said two housings' (3, 4), anti-rotation means which are interposed between each first covering layer and the relative housing (3, 4).

7. Hose according to Claim 4, **characterised by** the fact that the said covering and blocking means (83, 84) comprise, at least for each housing (3, 4), a second covering layer (53R, 54R) which is arranged in direct contact with an inner radial surface (53a, 54a) of the housing (3, 4) itself and which is interposed between the said first layer (S3, S4) and the outer race (3e, 4e) of the relative bearing (C3, C4).

8. Hose according to Claim 7, **characterised by** the fact that the said second shoulder (63R, 64R) is produced in a single piece with the said second layer (53R, 54R).

9. Hose according to Claim 8, **characterised by** the fact that the said covering and blocking means (83, 84) comprise an inner covering (55R), which internally covers the said tubular body (2), and which connects to each other the second layers (53R, 54R) of each housing (3, 4).

10. Hose according to Claim 9, **characterised by** the fact that the said inner covering (55R) and the said second layers (53R, 54R) are produced by co-molding with the said bearings (C3, C4) and the said tubular body (2).

## Patentansprüche

1. Mit einem Kunststofflaugenbehälter mitabformbarer Schlauch (1) (1'), insbesondere für eine Waschmaschine, der eine Längsachse (A) aufweist und zwei Lager (C3, C4), die entlang der Achse (A) in einem vorbestimmten Abstand voneinander angeordnet sind, und einen metallischen röhrenförmigen Körper (2), der sich entlang der Achse (A) erstreckt und für jedes Lager (C3, C4) mit einem Gehäuse für das relative Lager (C3, C4) versehen ist, das durch eine jeweilige radiale Innenfläche (53a, 54a) zur Achse (A) hin begrenzt ist, umfasst; wobei der Schlauch (1) (1') **dadurch gekennzeichnet ist, dass** er darüber hinaus Abdeck- und Blockiermittel (83, 84) umfasst, die mit den Lagern (C3, C4) und dem röhrenförmigen Körper (2) in jedem Gehäuse (3, 4) an einer Stelle mitabgeformt sind, die sich radial zwischen einer relativen radialen Fläche (53a, 54a) und einem relativen Lager (C3, C4) befindet, um das Gehäuse (3, 4) innen abzudecken und das relative Lager (C3, C4) in dem relativen Gehäuse (3, 4) zu blockieren.

2. Schlauch nach Anspruch 1, **dadurch gekennzeichnet, dass** die Abdeck- und Blockiermittel (83, 84) für jedes Gehäuse (3, 4) eine erste Abdeckschicht (S3, S4), die in direktem Kontakt mit einem Außenring (3e, 4e) des relativen Lagers (C3, C4) angeordnet ist, umfassen.

3. Schlauch nach Anspruch 2, **dadurch gekennzeichnet, dass** die Abdeck- und Blockiermittel (83, 84) für mindestens eines der beiden Gehäuse (3, 4) eine erste Schulter (93, 94) umfassen, die axial gegen das Lager (C3, C4) und axial außerhalb des Lagers (C3, C4) selbst bezüglich des röhrenförmigen Körpers (2) angeordnet ist, um in einer Axialrichtung von außerhalb des röhrenförmigen Körpers (2) das Lager (C3, C4) selbst zu blockieren.

4. Schlauch nach Anspruch 3, **dadurch gekennzeichnet, dass** jedes der Gehäuse (3, 4) eine zweite Schulter (63, 64) (63R, 64R) umfasst, die axial gegen das relative Lager (C3, C4) und an einer axialen Innenseite des Lagers (C3, C4) selbst bezüglich des röhrenförmigen Körpers (2) angeordnet ist, um das Lager (C3, C4) selbst in einer Axialrichtung von der Innenseite des röhrenförmigen Körpers (2) zu blockieren.

5. Schlauch nach Anspruch 4, **dadurch gekennzeichnet, dass** die zweite Schulter (63, 63) einstückig mit dem röhrenförmigen Körper (2) hergestellt ist.

6. Schlauch nach Anspruch 5, **dadurch gekennzeichnet, dass** die Abdeck- und Blockiermittel (83, 84) für mindestens eines der beiden Gehäuse (3, 4) Drehverhinderungsmittel umfassen, die zwischen jeder ersten Abdeckschicht und dem relativen Gehäuse (3, 4) angeordnet sind.

7. Schlauch nach Anspruch 4, **dadurch gekennzeichnet, dass** die Abdeck- und Blockiermittel (83, 84) mindestens für jedes Gehäuse (3, 4) eine zweite Abdeckschicht (53R, 54R) umfassen, die in direktem Kontakt mit einer radialen Innenfläche (53a, 54a) des Gehäuses (3, 4) selbst und zwischen der ersten Schicht (S3, S4) und dem Außenring (3e, 4e) des relativen Lagers (C3, C4) angeordnet ist.

8. Schlauch nach Anspruch 7, **dadurch gekennzeichnet, dass** die zweite Schulter (63R, 64R) einstückig mit der zweiten Schicht (53R, 54R) hergestellt ist.

9. Schlauch nach Anspruch 8, **dadurch gekennzeichnet, dass** die Abdeck- und Blockiermittel (83, 84) eine Innenabdeckung (55R) umfassen, die den röhrenförmigen Körper (2) innen abdeckt und die zweiten Schichten (53R, 54R) jedes Gehäuses (3, 4) miteinander verbindet.

10. Schlauch nach Anspruch 9, **dadurch gekennzeichnet, dass** die Innenabdeckung (55R) und die zweiten Schichten (53R, 54R) durch Mitabformen mit den Lagern (C3, C4) und dem röhrenförmigen Körper (2) gebildet werden.

## Revendications

1. Flexible (1) (1') co-moulable avec un bac en plastique, en particulier pour une machine à laver, présentant un axe longitudinal (A) et comprenant deux paliers (C3, C4) qui sont agencés le long de l'axe (A) à une distance déterminée l'un de l'autre, et un corps métallique tubulaire (2) qui s'étend le long de l'axe (A) et qui est pourvu, pour chaque palier (C3, C4), d'un logement pour le palier relatif (C3, C4) qui est délimité vers l'axe (A) par une surface radiale respective (53a, 54a) ; le flexible (1) (1') étant **caractérisé en ce qu'**il comprend, en outre, des moyens de recouvrement et de blocage (83, 84) qui sont co-moulés avec lesdits paliers (C3, C4) et ledit corps tubulaire (2) à l'intérieur de chaque logement (3, 4) dans une position qui est située radialement entre une surface radiale relative (53a, 54a) et un palier relatif (C3, C4) afin de recouvrir intérieurement le logement (3, 4) et de bloquer le palier relatif (C3, C4) à l'intérieur du logement relatif (3, 4).

2. Flexible selon la revendication 1, **caractérisé en ce que** lesdits moyens de recouvrement et de blocage (83, 84) comprennent, pour chaque logement (3, 4), une première couche de recouvrement (S3, S4) qui est agencée en contact direct avec un chemin de roulement externe (3e, 4e) du palier relatif (C3, C4).

3. Flexible selon la revendication 2, **caractérisé en ce que** lesdits moyens de recouvrement et de blocage (83, 84) comprennent, pour au moins l'un desdits deux logements (3, 4), un premier épaulement (93, 94) qui est agencé axialement contre ledit palier (C3, C4) et axialement à l'extérieur du palier (C3, C4) lui-même par rapport au corps tubulaire (2) afin de bloquer, dans une direction axiale depuis l'extérieur du corps tubulaire (2), le palier (C3, C4) lui-même.

4. Flexible selon la revendication 3, **caractérisé en ce que** chacun desdits logements (3, 4) comprend un deuxième épaulement (63, 64) (63R, 64R) qui est agencé axialement contre le palier relatif (C3, C4) et au niveau d'un côté axialement interne du palier (C3, C4) lui-même par rapport au corps tubulaire (2) afin de bloquer, dans une direction axiale depuis l'intérieur du corps tubulaire (2), le palier (C3, C4) lui-même.

5. Flexible selon la revendication 4, **caractérisé en ce que** ledit deuxième épaulement (63, 64) est produit d'une seule pièce avec ledit corps tubulaire (2).

6. Flexible selon la revendication 5, **caractérisé en ce que** lesdits moyens de recouvrement et de blocage (83, 84) comprennent, pour au moins l'un desdits deux logements (3, 4), des moyens anti-rotation qui sont interposés entre chaque première couche de recouvrement et le logement relatif (3, 4).

7. Flexible selon la revendication 4, **caractérisé en ce que** lesdits moyens de recouvrement et de blocage (83, 84) comprennent, au moins pour chaque logement (3, 4), une deuxième couche de recouvrement (53R, 54R) qui est agencée en contact direct avec une surface radialement interne (53a, 54a) du logement (3, 4) lui-même, et qui est interposée entre ladite première couche (S3, S4) et le chemin de roulement externe (3e, 4e) du palier relatif (C3, C4).

8. Flexible selon la revendication 7, **caractérisé en ce que** ledit deuxième épaulement (63R, 64R) est produit d'une seule pièce avec ladite deuxième couche (53R, 54R).

9. Flexible selon la revendication 8, **caractérisé en ce que** lesdits moyens de recouvrement et de blocage (83, 84) comprennent un recouvrement interne (55R), qui recouvre intérieurement ledit corps tubulaire (2), et qui relie l'une à l'autre les deuxièmes couches (53R, 54R) de chaque logement (3, 4).

10. Flexible selon la revendication 9, **caractérisé en ce que** ledit recouvrement interne (55R) et lesdites deuxièmes couches (53R, 54R) sont produits par co-moulage avec lesdits paliers (C3, C4) et ledit corps tubulaire (2).
